# EUROPÄISCHE PATENTANMELDUNG

(11) **EP 2 425 704 A2**
(43) Veröffentlichungstag der Anmeldung: **07.03.2012**
(21) Anmeldenummer: 10009152.9
(22) Anmeldetag: 03.09.2010
(51) Int. Cl.: A01F 15/14, B30B 9/30, B65B 27/12

(54) **Ballenpresse sowie Verfahren zum Umschnüren von Ballen in selbiger**

(71) Anmelder: Schwelling, Hermann, 88682 Salem (DE)
(72) Erfinder: Schwelling, Hermann, 88682 Salem (DE)
(74) Vertreter: Fürst, Siegfried

(57) **Zusammenfassung**

Die Erfindung betrifft eine Ballenpresse zum Verdichten von losem Material und zum Verschnüren des verdichteten Materialsw zu Ballen sowie ein Verfahren zum Umschnüren von Ballen in selbiger. Sie findet Anwendung, wo loses Abfallmaterial für die Lagerung, den Transport und die Weiterverarbeitung zu Ballen gepresst werden.

## Beschreibung

Die Erfindung betrifft eine Ballenpresse zum Verdichten von losem Material und zum Verschnüren des verdichteten Materials zu Ballen sowie ein Verfahren zum Umschnüren von Ballen in selbiger. Sie findet Anwendung, wo loses Abfallmaterial für die Lagerung, den Transport und die Weiterverarbeitung zu Ballen gepresst werden.

Ballenpressen sind an sich bekannt und beispielsweise beschrieben in der DE 39 18 065 A1, der EP 1 190 618 B1 oder EP 1 785 351 A1. Es sind verschiedene Bauarten von Ballenpressen verbreitet, darunter Kanalballenpressen, denen auch der Gegenstand der vorlieganden Anmeldung zuzuordnen ist.

Die Bauart und die Größe der Ballenpresse richtet sich zu einem nach dem speziellen Anwendungsgebiet und zum anderen nach den räumlichen Gegebenheiten am Ort der Aufstellung der Ballenpresse.

In Betracht gezogen werden hier Ballenpressen so genannter horizontaler Bauart. Bei diesen Ballenpressen wird über einen Einfüllschacht von oben her besagtes Abfallmaterial in einen Presskasten gefüllt. Zwischen zwei Seitenwänden der Ballenpresse nebst des Presskastens ist, in horizontaler Ausrichtung betrachtet, auf einer Seite vom Presskasten eine vorbewegliche und zurückziehbare Pressplatte und gegenüberliegend ein Presskanal angeordnet. Die Pressplatte wird in der Regel mit einem hydraulischen Antrieb bewegt.

Das in den Presskasten eingefüllte Abfallmaterial wird mittels der Pressplatte durch den Presskasten hindurch in den an den Presskasten anschließende Presskanal gepresst.
Mit mehreren Presshüben wird aus dem jeweils eingefüllten, von der Pressplatte im Presskasten vorverdichleten Abfallmaterial im Presskanal ein aus mehreren Teilabschnitten zusammengesetzter Ballen geformt. Sobald der Ballen eine vorgegebene Ballenlänge hat oder nach einer vorgegebenen Anzahl von Presshüben, wird er mit wenigstens einem, in der Regel mit mehreren zueinander in Abstand angelegten Umschnürungsmaterial, oft Bindedraht, umschnürt.

Eine Kanalballenpresse mitsamt einer Vorrichtung zum Umschnüren von Ballen ist auch aus der DE 24 19 151 A1 bekannt.

Vor der Bildung des ersten Teilabschnittes wird / werden am Eingang des Presskanals eine offene Schlinge oder mit Abstand zueinander mehrere offene Schlingen aus Umschnürungsmaterial gelegt. Das Umschnürungsmaterial ist endlos und in Form von Rollen auf Bandvorratsstationen gelagert. Beim Einschieben der Teilabschnitte des Ballens in den Presskanal legt sich die Schlinge bzw. die Schlingen an den Außenumfang des gefertigten Ballens an. Jeweils nach Fertigstellung eines Ballens wird mit Hilfe von je einer Ziehnadel, die quer durch den Presskanal geschoben wird, Schnürmaterial von der einen Kanalwand zur anderen Kanalwand gezogen und sodann werden Abschnitte des so genannten Unterbandes und des so genannten Oberbandes miteinander verknotet oder verdrillt, derart, dass das Schnürmaterial straff am fertig gepressten Ballen anliegt; zugleich wird jeweils eine neue Schlinge gebildet; die alte Schlinge und die neue Schlinge werden durch Scheren voneinander getrennt.

Zur problemlosen Hindurchführung der Ziehnadeln durch den Presskanal, Erfassen des Schnürmaterials und dem Durchziehen des jeweiligen Schnürmaterialabschnittes sind verschiedenste Vorrichtungen bekannt. In bevorzugter Ausführung sind Elemente dieser Vorrichtungen auch in den Frontbereich der Pressplatte integriert. Die Ziehnadeln werden in der Regel in einer Führungsvorrichtung geführt und gemeinsam angetrieben.

Rein kinematisch betrachtet arbeitet die
Umschnürungsvorrichtung genannter Ballenpressen einwandfrei. In der praktischen Anwendung haben sich jedoch Störungen ergeben, da der verwendete Bindedraht sehr unterschiedlicher Qualität ist; aus wirtschaftlichen Gründen wird meist nur billiger Draht verwendet.

Aus den vorgenannten Gründen besteht In einer Reihe von Anwendungsfällen die Forderung, dass das Umschnürungsmaterial nicht metallisch sein soll, also ein Kunststoffband oder ein Garn verwendet werden muss

Kunststoffband oder Garn können nicht verdrillt werden. Die Enden der noch offenen Schlingen müssen miteinander verschweißt oder verknotet werden.
Die Umschnürungsvorrichtungen der vorgenannten Bellenpressen sind hierfür weniger geeignet.

Für das Urnschnüren mit Kunststoffband oder Garn eignen sich Ballenpressen nebst Umschnürungsvorrichtungen in einer Bauart, wie sie aus der DE 25 04 059 A1, DE 27 28 203 A1 oder zum Beispiel aus der DE 25 40 452 bekannt sind. Für jeweils eine Umschnürung ist jeweils nur eine Bandrolle vorgesehen. Das Band/Garn wird vor dem Pressen von der Unterseite aus durch den Boden des Presskanals gezogen und an einer oberhalb der oberen Kanalwand an einer Laufkatze angeordneten Halterung festgelegt. Beim Pressen der Teilabschnitte eines Ballens im Presskanal wird hier statt einer U-förmigen offenen Schlinge eine L-förmige offene Schlinge je vorgesehener Umschnürung gelegt.
Nach Fertigstellung der vorgegebenen Ballenlänge bzw.
Erreichung einer vorgegebenen Anzahl von Presshüben wird mit jeweils einer Ziehnadel ein Band von unterhalb des Presskanals nach oberhalb des Prasskanals gezogen. Das vor dem Pressen eines Ballens an der Laufkatze zeitweilig festgelegte Ende des Schnürmeterials wird nun mit dem anderen herausstehenden Abschnitt des Schnürmaterials verschnürt, sodass jeweils eine feste Umschnürung an den Ballen angelegt ist. Das frei werdende Ende des nach oberhalb des Presskanal gezogenen Abschnittes des Schnürmaterials wird vor dem Pressen eines weiteren Ballens an der Laufkatze befestigt.

Am Markt besteht einerseits stetig die Forderung, die Effizienz von Ballenpressen bezüglich des Arbeitsablaufes, des Wartungsaufwandes und der Arbeitskosten zu optimieren, andererseits besteht jedoch am Markt auch die Forderung, die für Ballenpressen nicht unerheblichen Investitionskosten zu senken. Also einerseits sollen die Funktionsvielfalt und Funktionssicherheit erhöht werden, andererseits Herstellungs- und Betriebskosten gesenkt werden. Zudem gibt es eine Vielzahl von Anwendungen, die ein Maximum für die Bauhöhe einer Ballenpresse vorgeben. In Funktionsräumen von üblichen Handelseinrichtungen, insbesondere solchen in sogenannten Altbau-Gebieten, beträgt die maximale Höhe 3m. Oft ist auch die Fläche begrenzt, sodass eine Ballenpresse eine möglichst geringe Stellfläche haben soll.

Vor diesem Hintergrund geht die Erfindung von einer Presse aus, bei der das Umschnürungsmaterial unterhalb des Pressenbodens dem Umschnürungsbereich der Ballenpresse zugeführt ist, also nur mit Unterbändern arbeitet.
Hier liegt die Aufgabe zugrunde, eine Ballenpresse zu schaffen, bei der das Umschnüren der Ballen gegenüber Bekanntem insgesamt einfacher und sicherer erfolgt sowie der Aufwand für die Herstellung, für den Betrieb und für die Wartung betreffender Baueinheiten/Bauteile gegenüber bekannten Umschnürungen bei Ballenpressen geringer ist, zudem soll die räumliche Ausdehnung der Ballenpresse gering sein.

Die Aufgabe wird durch ein Verfahren zum Umschnüren von in einer Ballenpresse aus losem Abfallmaterial erzeugten Ballen mit den Merkmalen des Patentanspruches 1 gelöst sowie mit einer Ballenpresse mit den Merkmalen des
Patentanspruches. Die nachgeordneten
Patentansprüche offenbaren Ausführungsvarianten und vorteilhafte Ausgestaltungen des Verfahrens bzw. der Ballenpresse.

Gemäß der Erfindung ist bei einer Ballenpresse genannter Gattung für das Umschnüren des in selbiger aus losem Abfallmaterial erzeugten Ballen verfahrensmäßig vorgesehen, dass vor dem Pressen jedes Ballens Umschnürungsmaterial, vorzugsweise Bandmaterial aus Kunststoff oder nichtmetallischen Stoffen vor die Frontfläche eines jeden zu erzeugenden Ballen Umschnürungsmaterial, im Weiteren vereinfacht Band genannt, positioniert wird. Das in einer Bandvorratsstation der Ballenpresse gelagerte Band wird vorzugsweise unterhalb des Bodens der Ballenpresse bzw. in einem seitlichen Bodenbereich an der Ballenpresse entlang bis zu einem Übergangsabschnitt der Ballenpresse geführt, in der deren Umschnürungseinheit vorgesehen ist. Diese Umschnürungseinheit arbeitet halbautomatisch. Und zwar im Sinne der Erfindung so, dass das Durchziehen des Bandes von der einen Seite zur anderen Seite der Ballenpresse, hier von deren Unterseite zur Oberseite, automatisch mit Bauteilen einer Bandziehstation und ihrer unten im Bodenbereich angeordneten Bandleitstation erfolgt und das Verknoten der Enden des Bandes nach Fertigstellung eines Ballens manuell durchgeführt wird, ebenso das Positionieren des Endes eines Abschnittes des Bandes an der Ballenpresse vor der Erzeugung eines Ballens. Je nachdem, wie viel Umschnürungen bei der Konzipierung der Ballenpresse vorgesehen werden, umfasst die Bandziehstation zwei oder weitere Hydraulikzylinder, die fest an einem Rahmen der Bandziehstation sind. Die ausfahrbaren Kolbenstangen dieser Hydraulikzylinder sind zugleich die Ziehnadeln der Bandziehstation. Dazu ist jeweils an dem freien Ende der Kolbenstange eines jeden Hydraulikzylinders ein Kopfteil vorgesehen, dessen freies Ende als Fanghaken ausgebildet ist.

Das freie Ende eines jeden von einer in einer Bandvorratsstation gelagerten Bandrolle abgezogenen Bandes wird Ober eine erste Bandführung und eine zweite Bandführung unterhalb und/oder seitlich des Bodens der Ballenpresse bis zu einer Bandleitstation geführt und dort fixiert. Diese Bandleitstation ist Bestandteil der Umschnürungseinheit; sie wird im Detail noch weiter hinten näher beschrieben.

Mit der bereits erwähnten Bandziehstation werden deren Ziehnadeln abgesenkt, bis deren freie Enden den Boden der Ballenpresse durchfahren haben und sich unterhalb des jeweiligen Kunststoffbandes befinden. In dieser Arbeitsposition befindet sich die frontseitig an einem Pressstempel angeordnete Pressplatte in ihrer vorderen, presskanalseitigen Position. Die vertikalen Nuten der Pressplatte sind dabei unterhalb der Ziehnadeln.

Sodann werden die Ziehnadeln wieder zurück in ihre obere Ausgangsposition, die Warteposition bewegt.

Dabei erfasst ein an jeder Ziehnadel vorgesehener Mitnehmer, ein Fanghaken, das jeweilige Band und zieht selbiges, unter Bildung einer offenen Schlaufe nach oben, bis die zwei Abschnitte der gebildeten v-förmigen Schlaufe des Bandes oberhalb des Presskanals bzw. des Presskastens sind.

Dann wird in der Schlaufenkrümmung nacheinander jedes Band durchschnitten. Der unterhalb des Bodens fixierte Abschnitt der ehemaligen Schlaufe fällt zurück, so dass er unterhalb des Bodens zu liegen kommt.

Der andere, zur Pressplatte hin gewandte Abschnitt der Schlaufe wird soweit nach oberhalb des Presskanals gezogen bis sein freies Ende hinter einer vorbestimmten Position außen auf der Oberseite des Presskanals liegt.

Diese Position entspricht in etwa der Länge eines im Presskanal gepressten Ballens. Diese Position definiert zugleich auch die Lage der Frontfläche eines fertig gepressten Ballens.

Oberhalb des Presskanals sind im Bereich der Durchführungen für das Umschnürungsmaterial Spannkörper in entsprechender Anzahl vorgesehen. Bei der Positionierung des außen liegenden Abschnittes ist der Spannkörper in einer Position "offen" und wird nach der Positionierung besagten Abschnittes geschlossen. Im Spannkörper wird das Band geführt und nur so fest gehalten, dass es geführt gleiten kann und sich bei der durch das Pressen voranschreitenden Ballenbildung an dessen Oberseiten in einem straffen Zustand anliegt.

Mit einem oder mehreren Presshübe wird der erste Ballen gepresst, bis dessen Vorderfläche im Presskanal die besagte Position erreicht. Der Abschnitt, die Länge zwischen dieser Position und der Frontseite der Pressplatte ist die Länge eines Ballens. Diese Länge kann je nach Ausführung der Ballenpresse bzw. entsprechend des zu verpressenden Materials bzw. Materialsgemisch von Abfall durch den Bediener der Ballenpresse eingestellt werden oder sie ist in der Steuereinheit der Ballenpresse hinterlegt und wird während der Eingabe der Materialart des zu pressenden Abfalls an der Steuereinheit automatisch abgerufen.

Nach Erreichen dieses Verfahrensschrittes, der besagten Position, werden die Ziehnadeln wieder abgesenkt. Sie durchfahren jeweils eine vertikale Nut in der Pressplatte bis deren freie Enden unter dem Abschnitt des Bandes ist, der dort von unterhalb des Bodens zur inneren Bodenfläche des Presskanals überführt wird.

Sodann werden die Ziehnadeln der Bandziehstation wieder in ihre Ausgangsposition zurück bewegt, dabei wird von jeder vorgesehenen Ziehnadel ein Band erfasst und mit nach oben genommen, wiederum unter Bildung einer Schlaufe. Nach Erreichen der oberen Position wird die gebildete Schlaufe in deren Umkehrung getrennt.

Der nun freie eine Abschnitt wird durch einen ballenseitigen Schlitz in der Pressplatte hindurchgeführt und an die hintere, der Pressplatte zugewandten Fläche des Ballens angelegt und in seinem oberen Kantenbereich mit dem freien Ende des auf der Oberseite des Presskanals geführten Bandabschnittes verknotet.

Der andere, beim Trennen entstandene, zum Presskasten zeigende freie Abschnitt des Bandes wird wiederum, wie zuvor schon beschrieben, soweit nach oben herausgezogen bis dessen freies Ende hinter der besagten Position ist und wird mit dem Spannkörper geführt.

Danach wird wieder mittels mehrerer Presshübe des Pressstempels ein neuer Ballen aus Abfallmaterial im Presskanal geformt und nach Erreichen der vorbestimmten Ballenlänge wie zuvor beschrieben umschnürt.

Für ein gutes Handling des Umschürungsmaterial beim Positionieren vor dem ersten Presshub und der Verknotung am fertig gepressten Ballen ist die unterhalb des Bodens angeordnete Bandleitstation speziell ausgebildet. Details werden weiter hinten noch näher erläutert.

In einer neuen, erfinderischen Ausführung gehören zu dieser Bandleitstation ein Führungsstab und ein Befestigungsstab, die unter dem Boden der Ballenpresse im Bereich der Durchführungen für die Ziehnadeln angeordnet sind.

Vorteilhaft wird das Verfahren bei einer Ballenpresse zum Verdichten von losem Material und zum Verschnüren des verdichteten Materials zu Ballen verwendet, weiche einen Presskasten, der eine Einfüllöffnung aufweist, durch die hindurch das lose Material in den Presskasten gelangt,
einen ausgangsseitig des Presskastens in horizontaler Ausrichtung folgenden Presskanal sowie
einen von einer Ausgangsstellung aus durch den Presskasten hindurch bis in die Nähe des Anfanges des Presskanals vor- und zurück beweglichen Pressstempel sowie eine Umschnürungseinheit für das Umreifen des fertig gepressten Ballen mit Umschnürungsmaterial aufweist. Die Umschnürungseinheit ist außerhalb des Endabschnittes des Presskastens angeordnet, wobei im betreffenden Abschnitt
Öffnungen in der Pressenoberseite für das Durchführen von Ziehnadeln der Umschnürungseinheit vorgesehen sind.
Die Ziehnadeln der Umschnürungseinheit werden einzeln angetrieben. Näheres hierzu und zu den weiteren Baugruppen der Umschnürungseinheit wird weiter hinten in der Beschreibung näher erläutert.

Die neue Ballenpresse wird zum Verdichten von losem Material, wie vorzugsweise zum Pressen von Papier, Kartonage, Folien, expansive Schaumstoffe, Styropor, Hohlkörper, PET-Behälter, Blecheimer, Fässer und dergleichen Verpackungsmaterial eingesetzt.

Sie findet Anwendung im Großhandel, Handel, Gewerbe, Logistikunternehmen, Zentralläger, der Papierindustrie, Druckereien, Industrieunternehmen, Entsorger und Verteilerzentren, also dort, wo loses Abfallmaterial für die Lagerung, den Transport und die Weiterverarbeitung zu Ballen gepresst werden.

Die Erfindung wird nachstehend anhand von schematisch in Zeichnungen dargestellten Ausführungsbeispielen in Details und im Weiteren näher erläutert.

Es zeigen:
- Figur 1: eine neue Ballenpresse in einer perspektivischen Seitenansicht;
- Figur 2: einen Querschnitt durch die Umschnürungseinheit der Ballenpresse nach Figur 1;
- Figur 2a: Details der Umschnürungseinheit nach Figur 2;
- Figur 3a bis 3e: eine neue Anordnung der Zuführung von Umschnürungsmaterial als Unterband;
- Figur 4.1 bis 4.16: Arbeitsschritte für das Anlegen einer Umschnürung an einen in einer Ballenpresse nach Figur 1 gepressten Ballen.

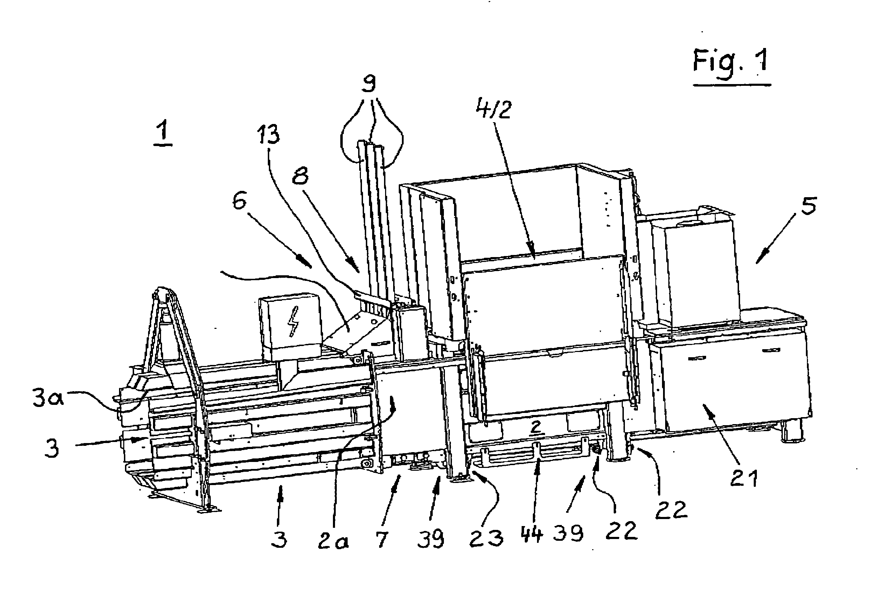

Die Figur 1 zeigt die neue Ballenpresse 1 in einer perspektivischen Seitenansicht. Sie umfasst unter anderem **-** in der Darstellung von rechts nach links gesehen in horizontaler Ausrichtung - einen Antriebsbereich 5, einen daran anschließenden Presskasten 2, an den sich dann ein Presskanal 3 anschließt. Oberhalb des Presskastens 2 ist eine

Einfüllöffnung 4 vorgesehen, die hier als Einfüllschacht ausgebildet ist. Bei dem zwischen dem Presskasten 2 und dem Presskanal 3 vorgesehenen Übergangsabschnitt 2a ist die Umschnürungseinheit der neuen Ballenpresse angeordnet. Sie besteht aus einer auf der Oberseite angeordneten Bandziehstation 8 und einer dazu korrespondierend unter dem Boden der Ballenpresse 39 angeordneten Bandleitstation 7. Die weiteren Bauteile der Bandziehstation 8 und der Bandleitstation 7 werden weiter hinten noch im Detail erläutert.

Nach dem Stand der Technik sind die in einer Bandvorratsstation gelagerten Bandrollen unterhalb des Bodens der Ballenpresse gelagert. In Realisierung der anstehenden Aufgabe ist die Bandvorratsstation bei dieser neuen Ballenpresse seitwärts am Antriebsbereich vorgesehen.
Von hier aus wird das Band mittels einer ersten

Bandführung 22 und einer zweiten Bandführung 23 unterhalb des Bodens 39 bis zur Bandleitstation 7 geführt und wenn notwendig umgelenkt. Nahe der Bandvorratsstation 21 sind bei der gezeigten Ausführung zwei erste Bandführungen 22 vorgesehen. Hierdurch wird in dem Bereich der Ballenpresse, indem sich der Maschinenbediener oft und sehr nahe an der Ballenpresse aufhält, das Band genügend weit unter der Ballenpresse geführt werden kann. In diesem Abschnitt ist im Bodenbereich 39 und seitwärts an der Ballenpresse 1 ein Schutzblech vorgesehen, damit die dort geführten Umschnürungsbänder nicht mit den Füßen des Maschinenbedieners oder mit einem anderen Gegenstand, zum Beispiel einem Kehrbesen, beeinträchtigt werden.

Damit ein Maschinenbediener im automatischen Betrieb der Umschnürungsstation nicht in selbige fassen kann, ist dieser Bereich mit einer Schutzhaube 19 abdeckbar. Dort ist ein Sicherheitsschalter vorgesehen, sodass bei nichtberechtigtem Öffnen der Pressenbetrieb unterbrochen wird.

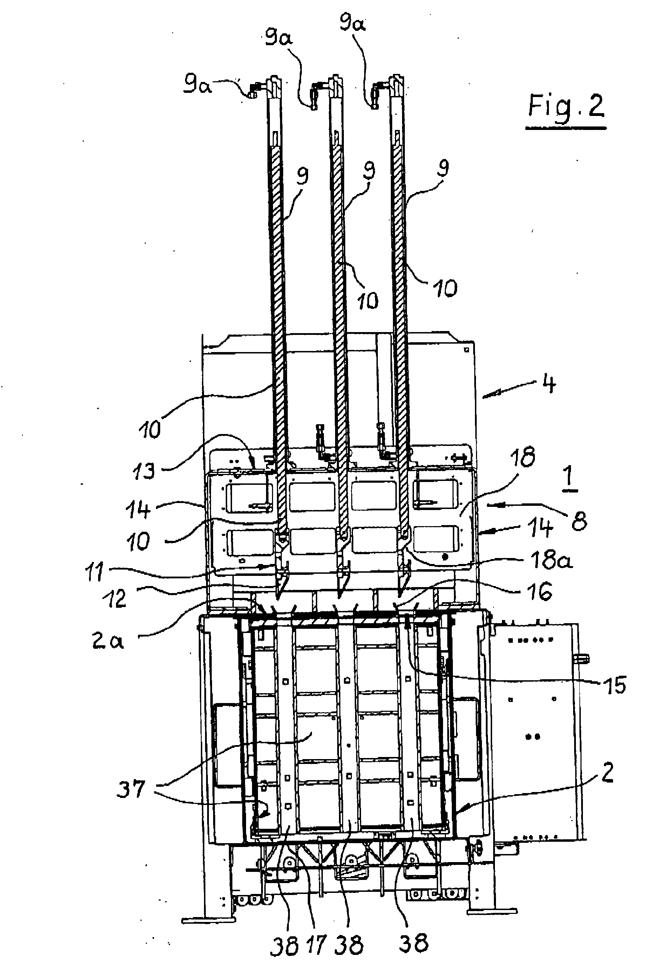

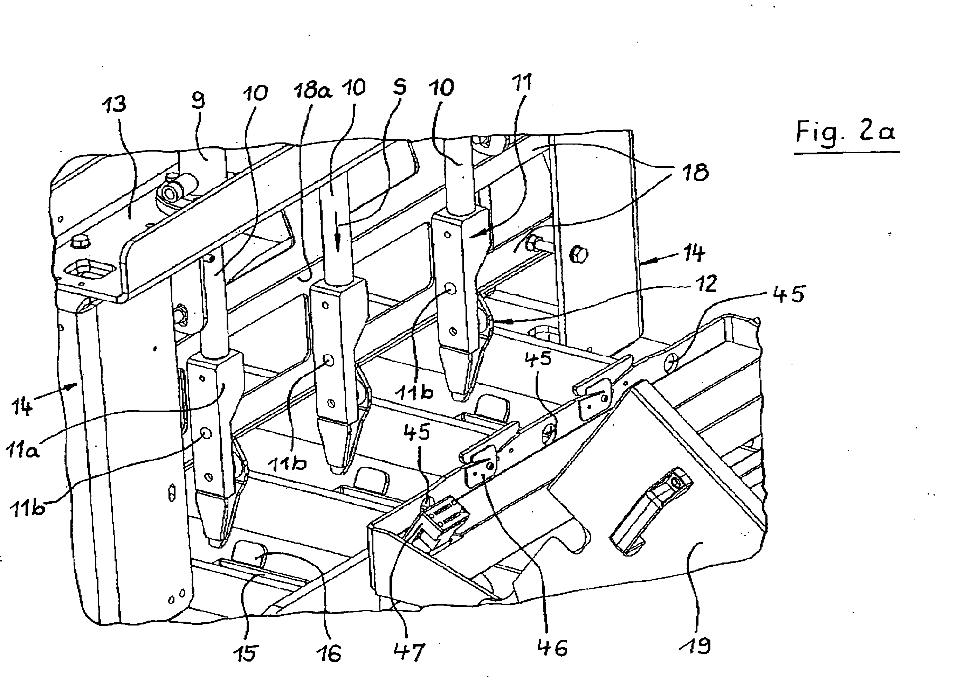

Mit der Figur 2 werden weitere Einzelheiten und Details der Umschnürungseinheit 6 gezeigt und erläutert. Die
Pressplatte 37 der Ballenpresse 1 befindet sich in ihrer vorderen Stellung. Der erzeugte Ballen ist fertig gepresst und in dieser Ansicht zur besseren Übersichtlichkeit ausgeblendet. In der Frontfläche der Pressplatte 37 sind Vertikalnuten 38 vorgesehen, deren Lage mit der Bewegungsrichtung der Bandziehnadeln 10 korrelieren.

Die Figur 2 ist ein Querschnitt durch den

Übergangsabschnitt 2a in der Ebene der Bewegung der Bandziehnadeln.

Auf der Oberseite der Ballenpresse 1 ist die Bandziehstation 8 angeordnet. Sie besteht aus den beiden Seitenteilen 14 und einer auf diesen Seitenteilen 14 abgestützten Traverse 13. Auf der Traverse 13 sind die vorgesehenen Hydraulikzylinder 9, hier drei Stück, fest angeordnet. In der Traverse sind entsprechend Durchgangsbohrungen vorgesehen, durch die hindurch die Kolbenstangen der Hydraulikzylinder 9, die Ziehnadeln 10, während deren Abwärts- bzw. Aufwärtsbewegung hindurch treten können. An den freien Enden der Kolbenstangen/Ziehnadeln 10 sind Kopfteile 11 vorgesehen. Diese Kopfteile haben an ihren freien Endabschnitten jeweils einen Fanghaken 12, Das Kopfteil 11 und der Fanghaken 12 können ein- oder mehrteilig sein. In dem Rahmen der Bandziehstation 8 ist zwischen den Seitenteilen 14 ein Führungsteil 18 vorgesehen. Korrespondierend zur Lage der Kopfteile und deren Bewegungsbereich sind Abschnitte des Führungsteiles 18 als Gleitflächen 18a gestaltet. Korrespondierend zur Lage der Gleitfläche 18 ist die zur Frontseite 11a der Kopfteile 11 entgegen gesetzte Seite/Fläche der Kopfteile 11, also die, die gegen die Pressrichtung zeigt, als Führungsfläche ausgebildet. Vorzugsweise sind die Kopfteile 11 quaderförmig, können jedoch auch jede andere Form haben, wichtig dabei ist jedoch nur, dass die zur Gleitfläche 18a zeigende Seite des Kopfteiles 11 einen ebenen Flächenabschnitt besitzt, zwecks Führung an der betreffenden Gleitfläche 18a. Die Führungsfläche am Kopfteil 11 und die Gleitfläche 18a bilden zusammen eine Verdrehsicherung. Dadurch ist erreicht, dass die an den Kopfteilen 11 vorgesehenen Fanghaken 12 von Anfang bis Ende ihrer Bewegung zum Heraufholen eines Abschnittes des Bandes 20 stets eine definierte Lage einnehmen. Die Länge der Gleitfläche 18a ist so, dass bis zum Eintauchen der Kopfteile 11 in die jeweils führende Vertikalnute 38 der Pressplatte 13 selbige 11 verdrehsicher geführt ist. Von dieser Position aus bis hinab zur unteren Position der Ziehnadel wird die Sicherung gegen Verdrehen des Fanghaken 12 von der betreffenden Vortikalnut 38 vorgenommen. Damit jede Ziehnadel 10 in die betreffende Vertikalnut 38 störungsfrei eintauchen kann, ist im Übergangsabschnitt 2a an der Oberseite der Ballenpresse 1 jeweils eine Öffnung 15 vorgesehen und im Boden 39 eine Durchführung 17. Unterhalb des Bodens 39 und unter den Durchführungen 17 liegt ein Führungsstab 24, der unten angeordneten Bandleitstation 7, die später noch in weiteren Details erläutert wird. Zu sehen ist auch die zweite Bandführung 23. In bevorzugter Ausführung sind an der ersten Bandführung 22, der zweiten Bandführung 23 und dem Führungsstab 24 entsprechend der vorgesehenen Anzahl von Umschnürungsbändern Keramikhülsen vorgesehen. Die Keramikhülsen dienen der Führung und der Umlenkung des jeweiligen Bandes.

Am Eingang der Öffnungen 15 sind zueinander beabstandet jeweils zwei Führungslaschen 16 vorgesehen, mit denen das Einfädeln der Kopfteile 11 in die jeweilige Vertikalnut 38 erleichtert wird. Zugleich wird mit diesen Führungslaschen 16 verhindert, dass die in der Regel spitzwinklig ausgebildeten Enden der Kopfteile beim Hindurchführen durch die über der jeweiligen Vertikalnut angeordneten Öffnung 15 beschädigt werden.

Die Figur 2a zeigt weitere Details der Bandleitstation 8. In jedem Kopfteil 11 ist eine Durchgangsbohrung 11 b vorgesehen. In der Ausgangsposition der Kopfteile 11, also in deren Ruhelage, fluchten die Durchgangsbohrungen 11b jedes vorgesehenen Kopfteiles 11 zueinander. Seitwärts der außen liegenden Kopfteile 11 ist eine optische Sensoreinheit, zum Beispiel eine Lichtschranke mit einem Empfänger und einem Sender angeordnet. Diese Lichtschrank bzw. deren Bauteile sind im Stand der Technik bekannt und daher hier nicht weiter zeichnerisch dargestellt. Sie sind bezüglich der Lage der Kopfteile 11 so angeordnet, dass nur dann, wenn alle vorgesehenen Kopfteile 11 sich in ihrer Ausgangsposition und Ruheposition befinden, vom Sender ein Signal zum Emfpänger gelangt und von diesem ein Schallsignal erzeugt wird. Erst wenn ein solches Schallsignal vorhanden ist, wird der Antrieb der Pressplatte freigegeben, sodass ein Presshub ausgeführt werden kann.

Zur Umschnürungseinheit 6 gehören auch noch nahe der an der Oberseite der Ballenpresse 1 vorgesehenen Öffnungen 15 gelegene Führungslöcher 45, hier entsprechend der vorgesehenen Anzahl von drei Bändern drei Stück. Diese Führungslöcher 45 dienen der zeitweiligen Festlegung der Enden des jeweiligen Bandabschnittes. Hierzu wird weiter hinten noch Näheres ausgeführt. In Nähe dieser Führungslöcher 45 sind ein oder mehrere Schneidelemente 46 angeordnet, mit denen jeweils eine von der Unterseite der Ballenpresse nach oben gezogene sogenannte Bandschlaufe aufgeschnitten werden kann, sodass das eine Ende zum Verknoten mit dem weiteren Ende des einen fertig gepressten Ballen angelegten Bandes erfolgen kann. Der in dieser Ansicht zu sehende Sicherheitsschalter der Schutzhaube 19 trägt hat das Bezugszeichen 47.

In den Figuren 1, 2 und 2a sind an sich bekannte und zum zumindest teilautomatischen Betrieb einer Ballenpresse notwendige weitere, bekannte Bauteile, je ein Hydraulikmotor, eine Steuerung für die Hydraulik, eine Steuerung für die elektrisch angetriebenen Teile der Ballenpresse sowie die elektronische Steuereinheit nicht dargestellt bzw. nicht mit einem Bezugszeichen versehen, da diese in der üblichen Anzahl und mit ihrer üblichen Funktion vorgesehen sind und hier daher nicht weiter beschrieben werden müssen.

In dieser Darstellung ist - von rechts nach links gesehen - im Übergangsbereich 2a von ihrem Presskasten 2 zu ihrem Presskanal 3 eine Umschnürungseinheit 6 vorgesehen, wobei deren Bandziehstation 8 im Wesentlichen über dessen oberen Wand und deren Bandleitstation 7 unterhalb von dessen Boden 39 positioniert ist.

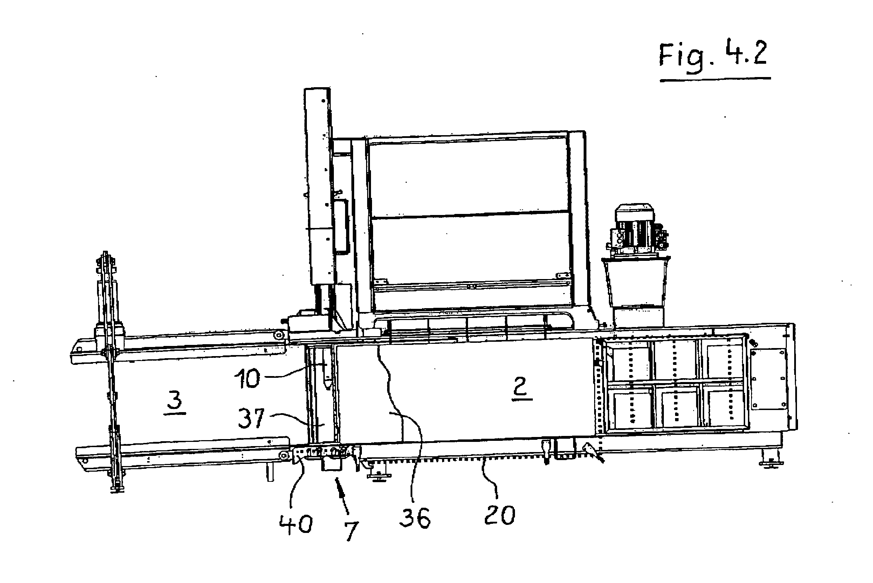

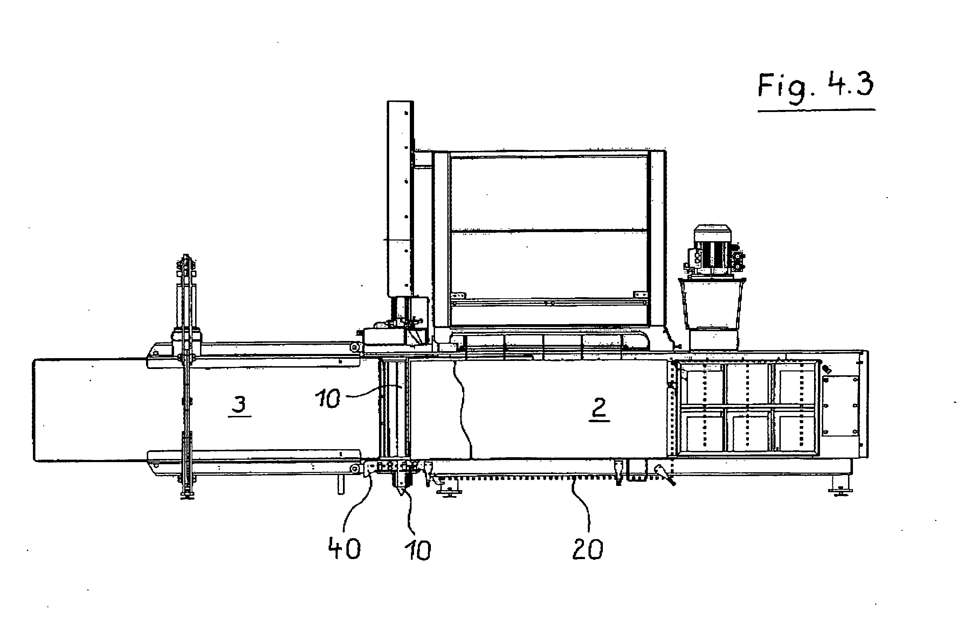

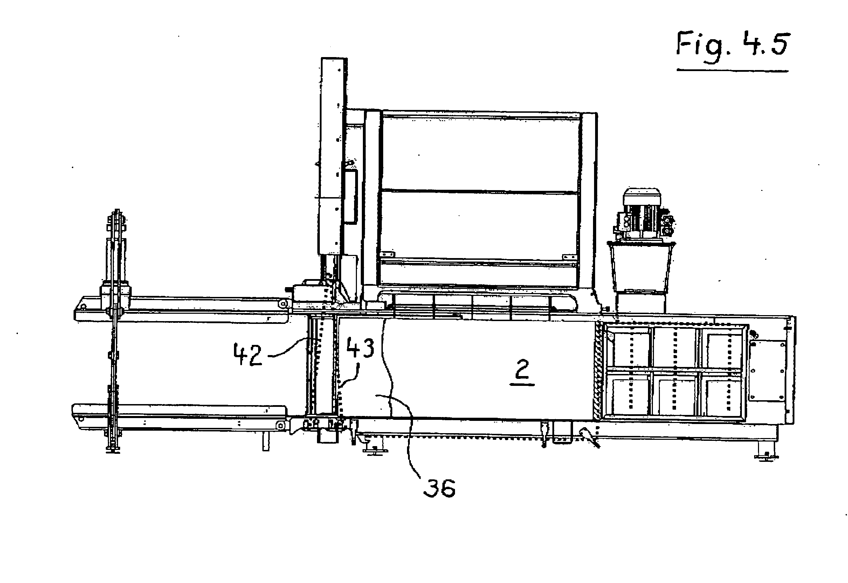

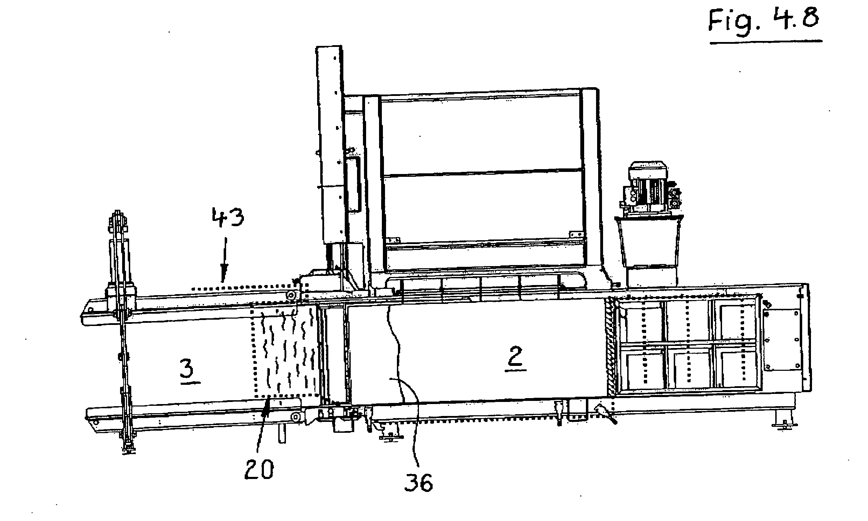

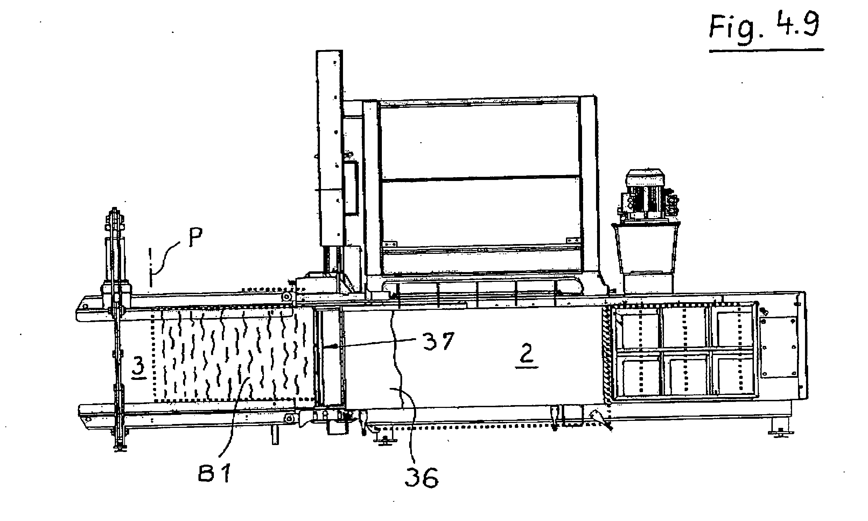

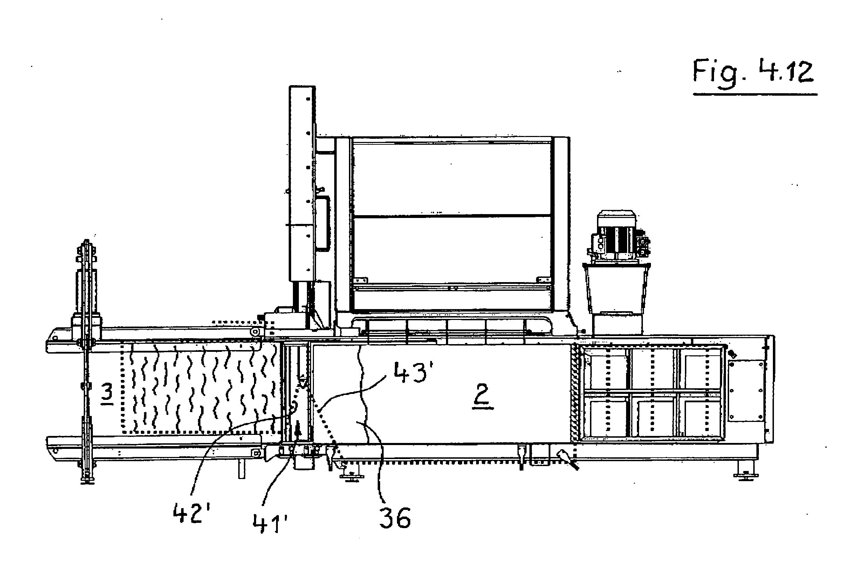

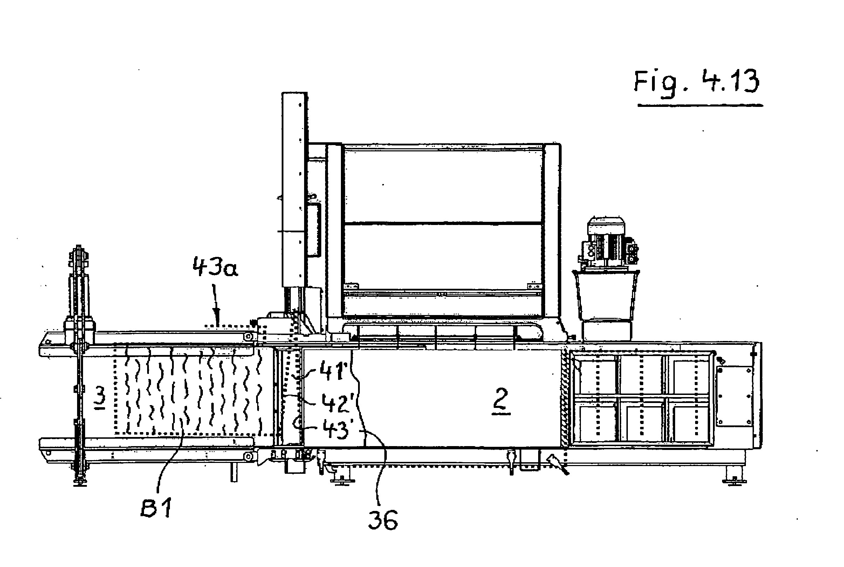

Die Figur 2 zeigt die Bandziehstation 8 und deren Ziehnadeln 10 in einer Warteposition. Mit dem Bezugszeichen S ist die Bewegungsrichtung markiert, in der sich die Ziehnadeln 10 zum Erfassen des Umschnürungsmaterials 20 bewegen. Sobald in dem Presskanal 3 ein Ballen (vgl. Figur 4.9) mit einer vorgegebenen Ballenlänge erzeugt ist bzw. nach Erreichen einer Anzahl vorgegebener Presshübe bleibt der Presstempel 36 eingangs des Presskanals 3 in einer vorderen, der Endstellung eines Presshubes zeitweilig stehen, so dass auf das zu einem Ballen zusammengepresste Abfallmaterial noch Druck ausgeübt wird (vgl. Figur 4.9).

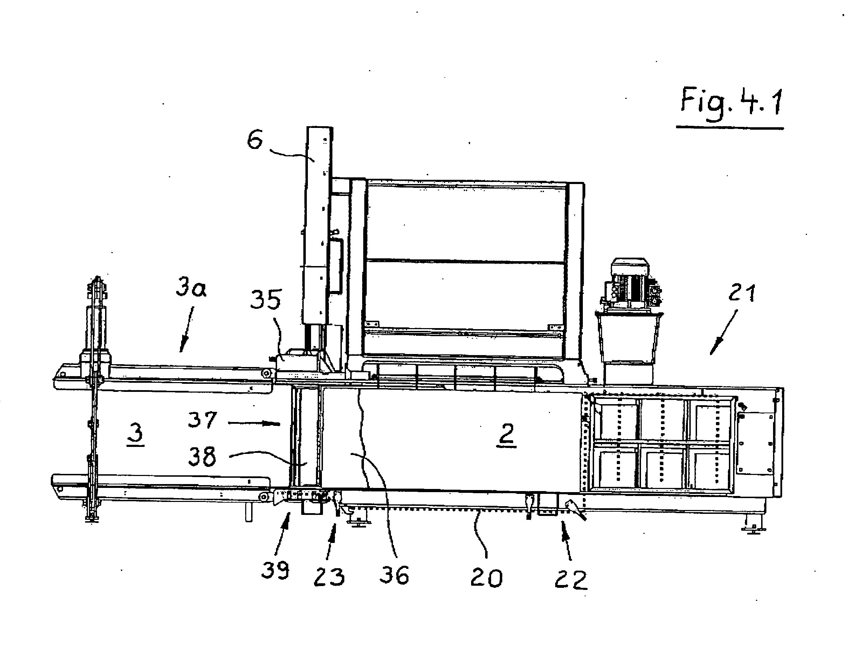

Die mittels den Ziehnadeln 10 nach oben gezogenen Abschnitten des Umschnürungsmaterials 20 werden dann mit dem an der Oberseite des geformten Ballens anliegendem Abschnitt des Umschnürungsmaterials 20 verbunden; die Details hierzu werden weiter hinten in Verbindung mit den Darstellungen in den Figuren 4.1 bis 4.16 noch im Einzelnen erläutert.

Die in den Figuren der Anmeldung verwendeten Bezugszeichen haben jeweils die gleiche Bedeutung, auch wenn sie nicht in der Beschreibung zu jeder Figur ausdrücklich genannt sind.

Die Arbeitsschritte für das Positionieren des Umschnürungsmaterials 20 an der Ballenpresse 1 vor dem Ausführen des ersten Presshubes, für das Umschnüren eines Ballens B sowie für das Positionieren des Umschnürungsmaterials 20 vor dem ersten Presshub zur Herstellung eines weiteren Ballens B sind in den Figuren 4.1 bis 4.16 schematisiert dargestellt.

Gemäß Figur 4.1 ist das Umschnürungsmaterial in einer Bandvorratsstation 21 gelagert, die, in diesem Ausführungsbeispiel, seitlich des Antriebsbereiches 5 der Ballenpresse 1 ist. Hier wird als Umschnürungmaterial ein Kunststoffband 20 verwendet, wobei dieses Kunststoffband 20 einen flachen, im wesentlichen rechteckigen Querschnitt hat, jedoch nicht auf diesen Querschnitt festgelegt ist. Der Querschnitt des Umschnürungmaterials kann rund sein, elyptisch, halbrund oder eine andere Querschnittsform besitzen. Das freie Ende 40 eines Kunststoffbandes 20 wird von der in der Bandvorratsstationen 21 gelagerten Bandrolle abgezogen und über eine erste Bandführung 22 und eine zweite Bandführung 23 unterhalb und/oder seitlich des Bodens 39 der Ballenpresse 1 bis zu einer Bandleitstation 7 geführt und dort fixiert, vgl. hierzu
Figuren 4.1 und 4.2.
Diese Bandleitstation 7 ist Bestandteil der
Umschnürungseinheit 6; sie wird im Detail noch weiter hinten beschrieben.

Mit der bereits weiter vorn erwähnten Bandziehstation 8 werden die Ziehnadeln 10 abgesengt, bis deren freie Enden den Boden 39 der Ballenpresse 1 durchfahren haben und sich unterhalb des Kunststoffbandes 20 befinden. Wie bereits erwähnt, befindet sich jetzt die frontseitig an einem Pressstempel 36 angeordnete Pressplatte 37 in ihrer vorderen, presskanalseitigen Position. Die vertikalen Nuten 38 der Pressplatte 37 sind dabei unterhalb der Ziehnadeln 10.

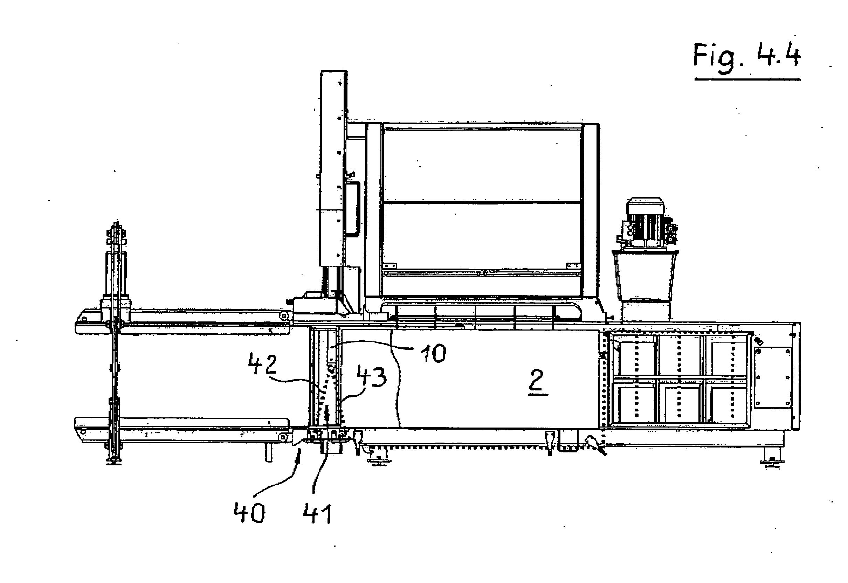

Sodann werden die Ziehnadeln 10 wieder zurück in ihre Ausgangsposition, die Warteposition bewegt, vgl. Figuren 4.4 bis 4.7.

Dabei erfasst ein an jeder Ziehnadel vorgesehener Mitnehmer das jeweilige Kunststoffband 20 und zieht selbiges, unter Bildung einer offenen Schlaufe 41 nach oben, bis Abschnitte 42, 43 der gebildeten v-förmigen Schlaufe 41 von Kunststoffband 20 oberhalb des Presskanals 3 bzw. des Presskastens 2 sind.

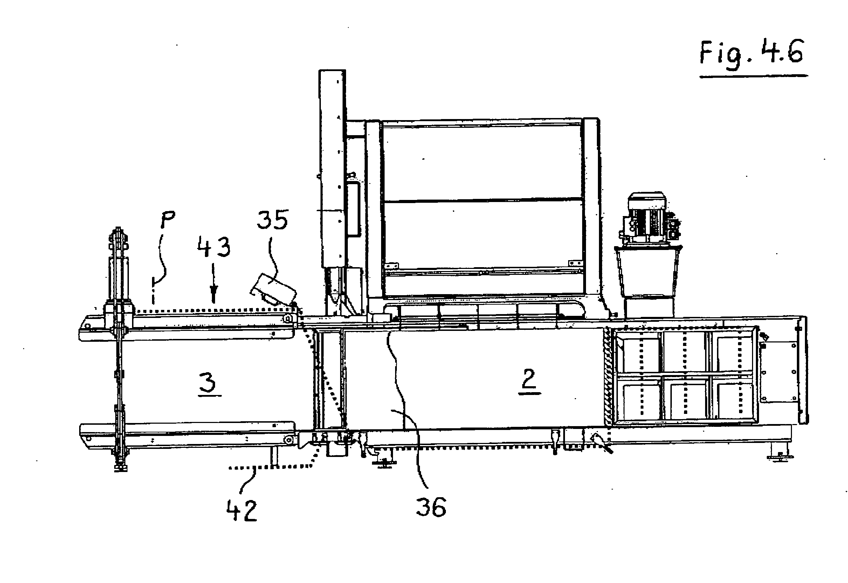

Dann wird in der Schlaufenkrümmung das Kunststoffband 20 durchschnitten. Der unterhalb des Bodens 39 fixierte Abschnitt 42 der ehemaligen Schlaufe 41 fällt zurück, so dass er unterhalb des Bodens 39 zuliegen kommt, vgl. Figur 4.6.

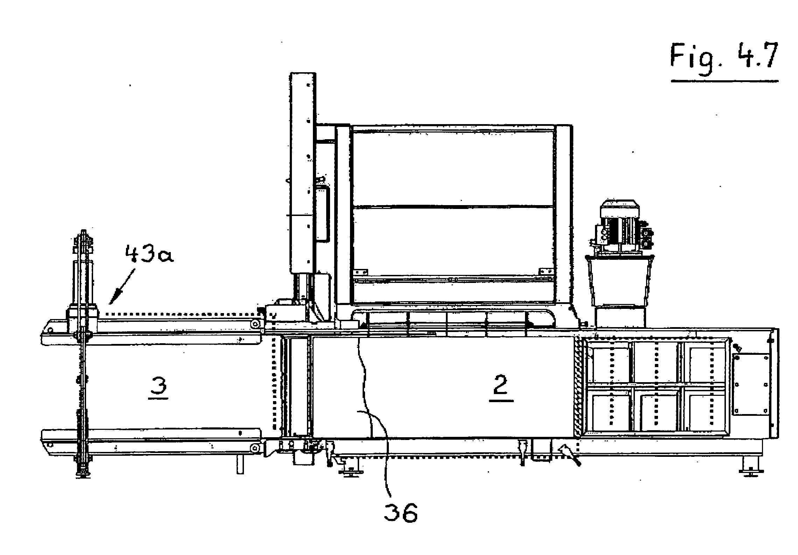

Der andere, zur Pressplatte 37 hin gewandte Abschnitt 43 der Schlaufe 41 wird soweit nach oberhalb des Presskanals 3 gezogen bis sein freies Ende 43a hinter einer Position P liegt, vgl. Figuren 4.6 und 4.7.

Diese Position P entspricht in etwa der Länge eines im Presskanal 3 gepressten Ballens. Die Position P definiert zugleich auch die Lage der Frontfläche eines fertig gepressten Ballens B.

Oberhalb des Presskanals 3 sind im Bereich der Durchführungen für das Umschnürungsmaterial Spannkörper 35 in entsprechender Anzahl vorgesehen. Bei der Positionierung des Abschnittes 43 ist der Spannkörper 35 in einer Position "offen" und wird nach der Positionierung besagten Abschnittes 43 geschlossen.

Im Spannkörper 35 wird das Kunststoffband 20 geführt und nur so fest gehalten, dass es in einem straffen Zustand geführt ist, vgl. Figur 4.7.

Mit mehrere Presshübe wird sodann der erste Ballen B 1 gepresst, bis dessen Vorderfläche im Presskanal 3 die Position P erreicht. Der Abschnitt, die Länge zwischen dieser Position P und der Frontseite der Pressplatte 37 ist die Länge eines Ballens B. Diese Länge kann je nach Ausführung der Ballenpresse bzw. entsprechend des zu verpressenden Materials bzw. Materialsgemisch von Abfall durch den Bediener der Ballenpresse eingestellt werden oder sie ist in der Steuereinheit der Ballenpresse 1 hinterlegt und wird während der Eingabe der Materialart des zu pressenden Abfalls an der Steuereinheit automatisch abgerufen.

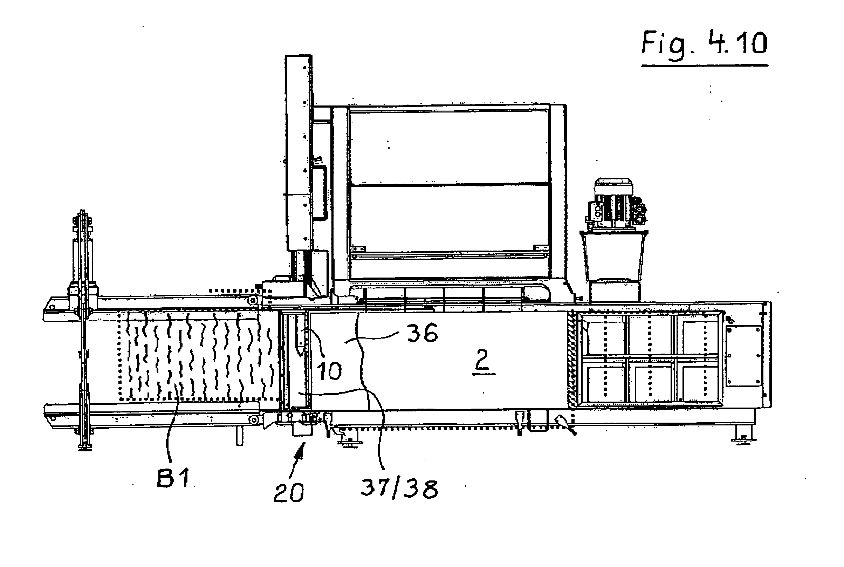

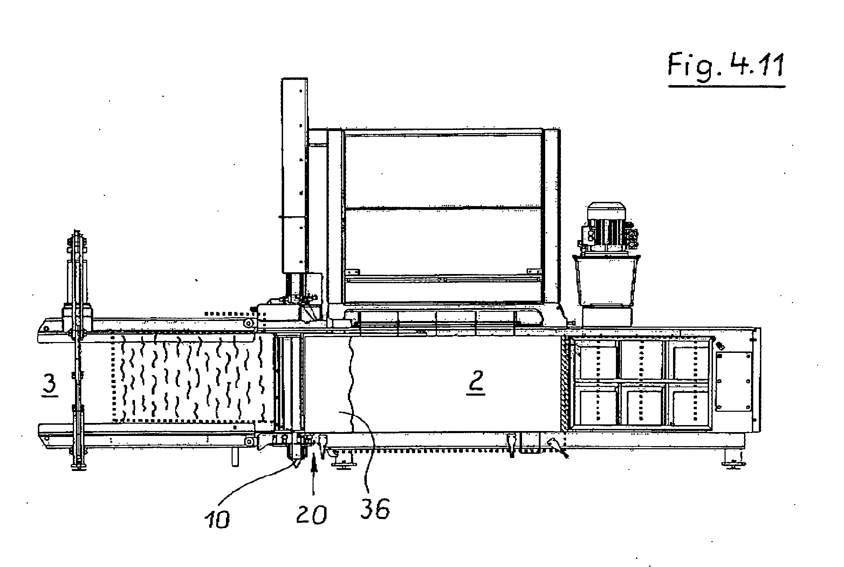

Nach Erreichen diesen Verfahrensschrittes, vgl. Figur 4.9, werden die Bandziehnadeln 10, vgl. Figur 4.10, wieder abgesenkt. Sie durchfahren jeweils eine vertikale Nut 38 in der Pressplatte 37 bis deren 10 freie Enden unter dem Abschnitt des Kunststoffbandes 20 ist, der dort von unterhalb des Bodens 39 zur inneren Bodenfläche des Presskanals 3 überführt wird, vgl. Figur 4.11.

Sodann werden die Bandziehnadeln 10 von der Bandziehstation 8 wieder in ihre Ausgangsposition zurück bewegt, dabei wird von jeder vorgesehenen Ziehnadel 10 ein Kunststoffband 20 erfasst und mit nach oben genommen, wiederum unter Bildung einer Schlaufe, die hier das Bezugszeichen 41' hat, mit deren Abschnitten 42' und 43'. Nach Erreichen der oberen Position wird die gebildete Schlaufe 41' in deren Umkehrung getrennt.

Der nun freie Abschnitt 42' wird durch einen ballenseitigen Schlitz in der Pressplatte 37 (hier nicht dargestellt) hindurchgeführt und an die hintere, der Pressplatte 37 zugewandten Fläche des Ballens B1 angelegt und in seinem oberen Kantenbereich mit dem freien Ende 43a des Bandabschnittes 43 verknotet bzw. verdrillt, je nachdem welche Art das Umschnürungsmaterial ist.

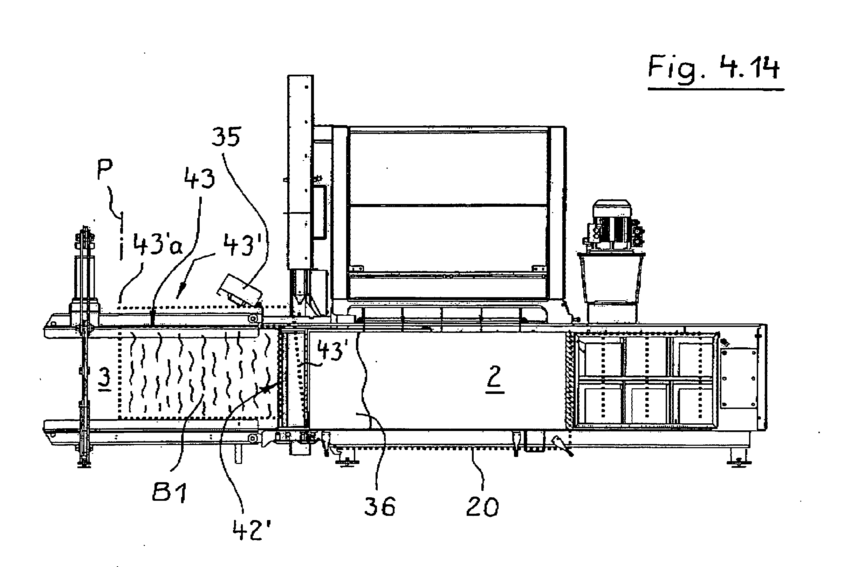

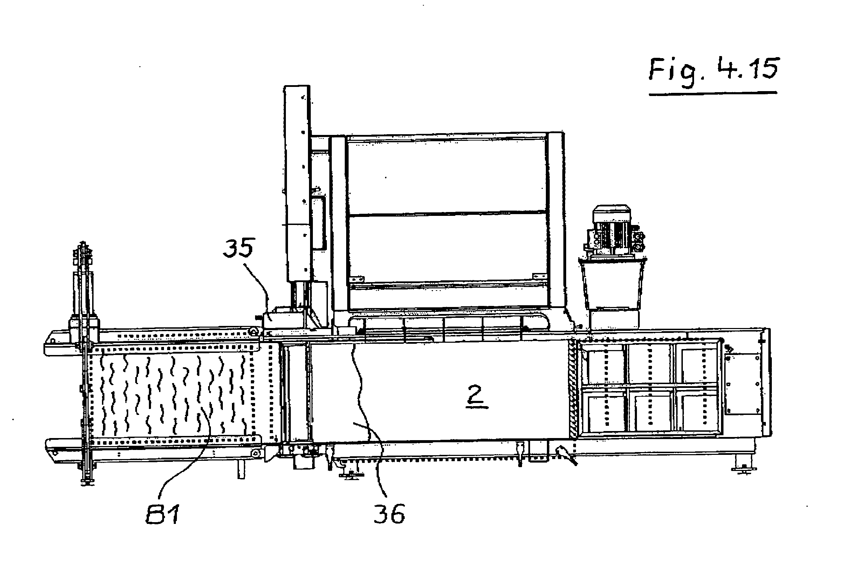

Der zum Presskasten 2 zeigende Abschnitt 43' wird wiederum, wie zuvor schon beschrieben, soweit nach oben herausgezogen bis dessen freies Ende 43'a hinter der Position P ist und wird mit dem Spannkörper geführt, vgl. Figuren 4.14 und 4.15.

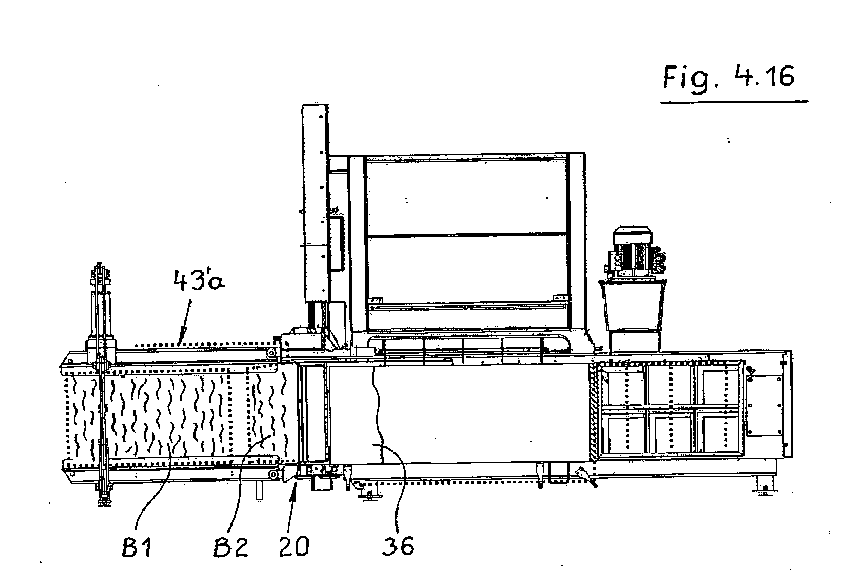

Danach wird mittels mehrerer Presshübe des Pressstempels 36 ein neuer Ballen B2 aus Abfallmaterial im Presskanal 3 geformt, vgl. Figuren 4.15 und 4.16.

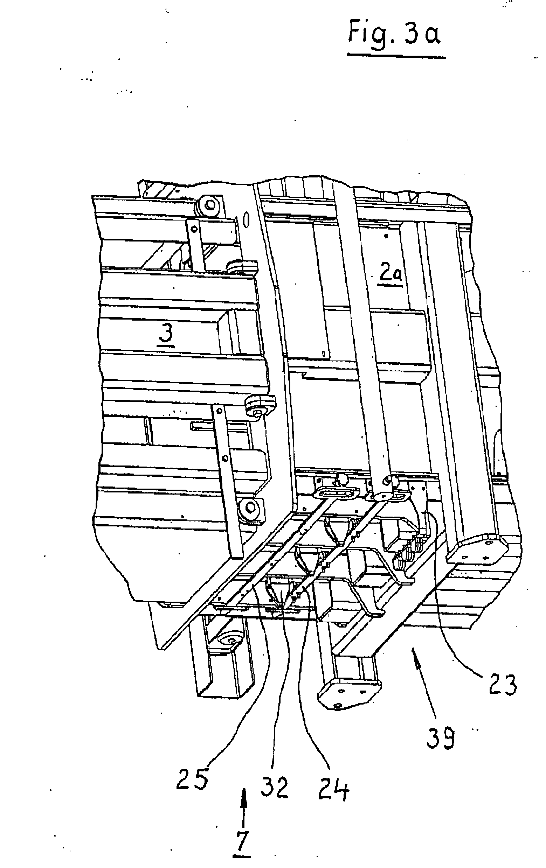

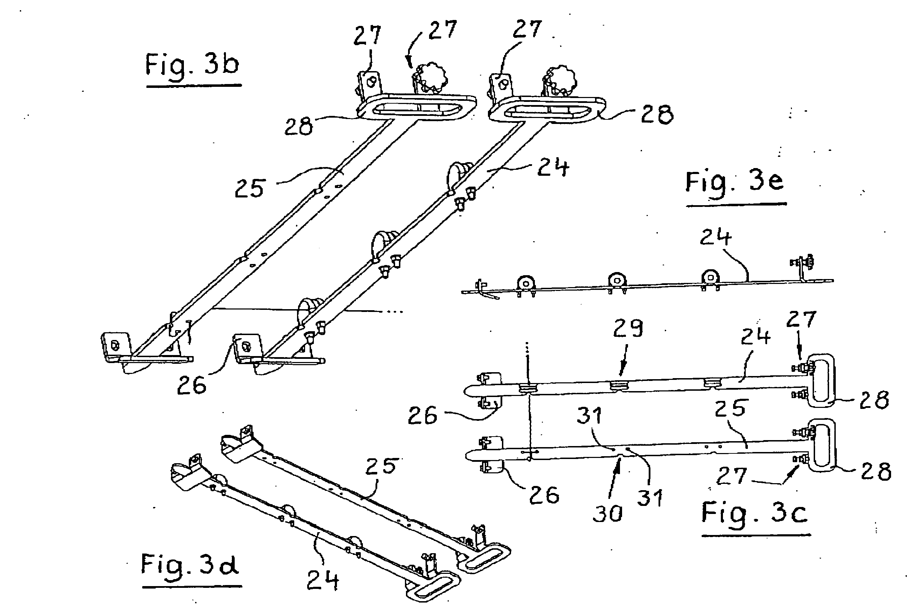

Für ein gutes Handling des Umschürungsmaterial beim Positionieren vor dem ersten Presshub und der Verknotung am fertig gepressten Ballen B ist die unterhalb des Bodens 39 angeordnete Bandleitstation 7 speziell ausgebildet, die Details hierzu sind in den Figuren 3a, 3b, 3c, 3d und 3e in verschiedenen Ansichten gezeigt.

In einer neuen, erfinderischen Ausführung gehören zu dieser Bandleitstation 7 ein Führungsstab 24 und ein Befestigungsstab 25, die unter dem Boden 39 der Ballenpresse 1 im Bereich der Durchführungen für die Ziehnadeln 10 angeordnet sind.

Der Führungsstab 24 ist zum Presskasten 2 hin und der Befestigungsstab 25 zum Presskanal 3 hin ausgerichtet sowie quer zur Vorschubrichtung des Presstempels 36 unter dem Boden 39 lösbar befestigt.

Hierzu ist auf der einen Seite des Bodens 39 jeweils ein Rastteil 26 befestigt. Der Führungsstab 24 sowie der Befestigungsstab 25 haben an ihrem einen Ende einen Griff 28 sowie zwei aufwärts gerichtete Laschen 27, das gegenüberliegende Ende der beiden Bauteile 24, 25 ist frei.

Diese freien Enden werden zum Festlegen jeweils in eines der Restteile 26 gesteckt und mit ihrem anderen Ende mittels den Laschen 27 auf der anderen Seite des Bodens 39, vgl. hierzu

Figur 1, lösbar befestigt. Dabei wird eine der Laschen 27 auf einen am Korpus der Ballenpresse vorgesehenen Bolzen gesteckt und sodann die in der zweiten Laschen 27 gehaltene Gewindeschraube am Korpus festgelegt.

Der Führungsstab 24 besitzt zudem Führungsringe 29, durch die das von der zweiten Bandführung 23 kommende Kunststoffband 20 hindurchgeführt wird, um dessen Ende 40 an einer Kerbe 30 und Bohrungen 31 des Befestigungsstabes 25 zu fixieren. Zwischen dem Führungsstab 24 und dem Befestigungsstab 25 sind am Boden 39 im Bereich der Durchgänge für die Ziehnadeln 10 Führungslaschen 32 angeordnet, mit denen das Kunststoffband 20 in einer Position geführt wird, die das Erfassen von selbigem durch die freien Enden der Ziehnadeln 10 erleichtert.

Diese Offenbarung bietet veranschaulichende erfindungsgemäße Ausführungsvarianten als Beispiele und nicht als Einschränkungen. Der Fachmann kann zahlreiche andere

Modifikationen und Ausführungsformen ersinnen, welche in den Rahmen und den Geist der erfindungsgemäßen Prinzipien fallen. Alle in der vorstehenden Beschreibung erwähnten sowie auch die allein aus den Zeichnungen entnehmbaren Merkmale sind weitere Bestandteile der Erfindung auch wenn sie nicht besonders hervorgehoben und in den Ansprüchen erwähnt sind.

### Bezugsziffernverzeichnis:

- 1: Ballenpresse
- 2: Presskasten
- 2a: Übergangsabschnitt
- 3: Presskanal
- 3 a: obere Wand von Pos. 3
- 4: Einfüllöffnung
- 5: Antriebsbereich
- 6: Umschnürungseinheit
- 7: Bandleitstation
- 8: Bandziehstation
- 9: Hydraulikzylinder
- 9a: Hydraulikleitungen
- 10: Ziehnadeln
- 11: Kopfteile
- 11 a: Frontseite
- 12: Fanghaken
- 13: Traverse
- 14: Seitenteile
- 15: Öffnungen
- 16: Führungslaschen
- 17: Durchführungen
- 18: Führungsteil
- 18a: Gleitflächen
- 19:
- 20: Umschnürungsmaterial (Kunststoffband)
- 21: Bandvorratsstation
- 22: erste Bandführung
- 23: zweite Bandführung
- 24: Führungsstab
- 25: Befestigungsstab
- 26: Rastteil
- 27: Lasche
- 28: Griff
- 29: Führungsrinne an Pos. 24
- 30: Kerben in Pos. 25
- 31: Bohrungen in Pos. 25
- 32: Führungslaschen
- 35: Spannkörper
- 36: Pressstempel
- 37: Pressplatte
- 38: Vertikalnuten
- 39: Boden von Pos. 1
- 40: freies Ende Pos. 1
- 41,41': offene Schlaufe
- 42, 42': Abschnitte
- 43, 43': Abschnitte
- 43a, 43'a: Freie Enden von Pos. 43, 43'
- 44, 45, 46: s. Beschreibung
- P: Position (Ballenlänge)
- B 1: erster Ballen
- B 2: zweiter Ballen
- S: Bewegungsrichtung (Schwerkraftrichtung)

## Patentansprüche

1. Verfahren zum Umschnüren eines in einer Ballenpresse erzeugten Ballens mit einer oder mehreren zueinander parallel beabstandet angeordneten Schlaufen aus Umschnürungsmaterial unter Zuhilfenahme einer der Ballenpresse zugeordneten Umschnürungseinheit, bei dem vor dem ersten Presshub für die Erzeugung eines Ballens aus losem Abfallmaterial das von unterhalb des Bodens der Ballenpresse zugeführte Umschnürungsmaterial quer zur Pressrichtung im Übergangsbereich zwischen einem Presskasten und dem Presskanal der Ballenpresse positioniert ist, wobei das obenseitig aus der Ballenpresse herausgeführte freie Ende eines jeden vorgesehenen Bandes zur Umschnürung mindestens in einer Ballenlänge herausgezogen wird und auf der Oberseite der Ballenpresse abgelegt wird, dabei ist das freie Ende nicht fixiert.

2. Verfahren nach Anspruch 1,
**dadurch gekennzeichnet, dass**
der aus der Oberseite der Ballenpresse herausgeführte Abschnitt des Bandes während des Pressvorganges gleitend geführt ist und, dass nach Fertigstellung des Ballens mit der Umschnürungseinheit ein weiterer Abschnitt des Bandes von unterhalb des Bodens der Ballenpresse nach oben gezogen wird unter Bildung einer offenen V-förmigen Schleife, sodann die Schleife aufgetrennt wird, das entstandene eine freie Ende der Schleife zeitweise festgelegt wird und das andere freie Ende mit dem vor dem Pressvorgang auf der Oberseite der Ballenpresse beweglich positionierten Bandabschnitt verknotet wird, sodass um den Ballen eine Schlaufe, Umschnürung angelegt ist, sodann das zwischenzeitlich festgelegte eine freie Ende wiederum zumindest in einer Ballenlänge nach oben herausgezogen wird und für den nächsten zu pressenden Ballen auf der Ballenpresse beweglich positioniert wird.

3. Verfahren zum Verdichten von losem Abfallmaterial nach Anspruch 2, gekennzeichnet nach mindestens einem der in der Anmeldung offenbarten Merkmale.

4. Ballenpresse zum Verdichten von losem Abfallmaterial gekennzeichnet nach mindestens einem der in der Anmeldung offenbarten Merkmale.

5. Ballenpresse nach Anspruch 4
zum Verdichten von losem Material und zum Verschnüren des verdichteten Materials zu Ballen, umfassend einen Presskasten (2), der eine Einfüllöffnung (4) aufweist, durch die hindurch das lose Material in den Presskasten (2) gelangt,
einen ausgangsseitig des Presskastens (2) in horizontaler Ausrichtung folgenden Presskanal (3) sowie einen von einer Ausgangsstellung aus durch den Presskasten (2) hindurch bis in die Nähe des Anfanges des Presskanals (3) vor- und zurück beweglichen Pressstempel (36) sowie eine Umschnürungseinheit (6) für das Umreifen des fertig gepressten Ballen (B) mit Umschnürungsmaterial (20),
wobei die Umschnürungseinheit (6) außerhalb des Endabschnittes des Presskastens (2) angeordnet ist, wobei im betreffenden Abschnitt Öffnungen für das Durchführen von Ziehnadeln (10) der Umschnürungseinheit (6) vorgesehen sind, und die Umschnürungseinheit (6) Ziehnadeln (10) besitzt.

6. Ballenpresse nach Anspruch 4 oder 5,
**dadurch gekennzeichnet, dass**
eine Bandziehstation (8) der Umschnürungseinheit vertikal ausgerichtet zum betreffenden Abschnitt des Presskastens (2) angeordnet ist.
- hierzu 21 Blatt Zeichnungen -
